# EUROPÄISCHE PATENTSCHRIFT

(11) **EP 1 886 551 B1**
(45) Veröffentlichungstag und Bekanntmachung des Hinweises auf die Patenterteilung: **07.03.2012**
(21) Anmeldenummer: 07015659.1
(22) Anmeldetag: 09.08.2007
(51) Int. Cl.: A01G 3/06

(54) **Schneidgerät mit oszillierendem Messer**
Cutting device with oscillating blade
Dispositif de coupe avec lame oscillante

(30) Priorität: 10.08.2006 DE 102006038353
(43) Veröffentlichungstag der Anmeldung: 13.02.2008
(73) Patentinhaber: GARDENA Manufacturing GmbH, 89079 Ulm (DE)
(72) Erfinder: Kohl, Peter, 89257 Illertissen (DE); Mosberg, Georg, 89134 Blaustein (DE); Baur, Günter, 89134 Blaustein (DE)

(56) Entgegenhaltungen:
- DE-A1- 2 058 984
- DE-A1- 2 419 468
- DE-A1- 2 545 733
- DE-A1- 2 718 355
- DE-A1- 2 841 655
- US-A- 3 732 676

## Beschreibung

Die Erfindung betrifft ein Schneidgerät, insbesondere ein Grasschneidegerät, mit einer Messeranordnung umfassend ein Untermesser und ein Obermesser, welche relativ zu einander oszillierend bewegbar sind.

Aus der DE 103 24 285 A1 ist eine elektromotorisch betriebene Grasschere mit einem Schneidkopf mit einer Messeranordnung, umfassend ein Obermesser und ein Untermesser bekannt, wobei der Schneidkopf gegenüber einem Griffteil um eine Schwenkachse verstellbar ist. Die Messeranordnung ist dabei im Gebrauch der Grasschere üblicherweise in einer Ebene angeordnet, welche von einem Untergrund beabstandet ist, um eine optimale Schnitthöhe zu realisieren. Insbesondere beim Schneiden mit einem langen Griffteil, beispielsweise einem Teleskopstiel, ist es möglich, dass die Grasschere leicht geneigt geführt wird, und so die Messeranordnung in den Boden gedrückt wird. Auch bei einem Verfahren auf unebenem Gelände, auf einem sandigen oder steinigen Untergrund, bei Erdhaufen, Ameisenhaufen oder bei anderen Unebenheiten, kann die Messeranordnung bei einer Vorwärtsbewegung in den Untergrund eintauchen. Dieses Eintauchen kann zu einem hohen Verschleiß der Messerschneiden der Messeranordnung führen.

Das in der deutschen Offenlegungsschrift DE 28 41 655 A1 beschriebene Schneidgerät weist einen als Kufe dienenden Führungsschuh auf. Der Führungsschuh erstreckt sich über die gesamte Breite der Messeranordnung. Um eine wirksame Schnittfläche freizugeben, ist der Führungsschuh in Bezug auf die Laufrichtung des Schneidgerätes relativ weit von den Enden der Zinken der Messeranordnung zurückgesetzt. Der Führungsschuh begrenzt jedoch nicht nur die wirksame Schnittfläche der Messeranordnung, sondern beeinflusst durch seine flächige Ausdehnung auch die Kämmwirkung der Messeranordnung negativ. Ebenso wird bei ungünstiger Gerätehaltung immer noch ein Eintauchen der Meszerschneiden in den Untergrund möglich, so dass einem Verschleiß der Messerschneiden nicht sicher entgegengewirkt wird.

In der US-Patentschrift US 3732676 A1 wird eine Kufe für ein Schneidegerät mit einer oszillierend bewegbaren Messeranordnung bestehend aus Unter- und Obermesser beschrieben. Hierbei weist das Untermesser Zinken auf, welche in Laufrichtung des Schneidgerätes durch Schutzfinger überragt werden. Diese Schutzfinger übernehmen auch die Kämmfunktion der Messeranordnung. Unterhalb wenigstens eines dieser Schutzfinger kann eine Kufe montiert werden, um eine gleichmäßige Schnitthöhe auch bei unebenem Untergrund einzuhalten. Die an den Schutzfingern befestigbare Kufe überragt die Zinken des Untermessers in Bezug auf die Laufrichtung des Schneidgerätes weit nach vorne hin, so dass ein kantennahes Schneiden nicht möglich ist. Ebenso überragt die Kufe den jeweilig zugeordneten Schutzfinger seitlich, so dass auch die Kämmwirkung der Messeranordnung ungünstig beeinflusst wird.

Es ist Aufgabe der vorliegenden Erfindung, ein Schneidgerät zu schaffen, wobei ein Verschleiß der Messerschneiden reduziert wird. Es ist weiter Aufgabe der vorliegenden Erfindung, eine Vorrichtung zu schaffen, durch welche ein Verschleiß der Messerschneiden eines Schneidgeräts, insbesondere einer Grasschere, verringerbar ist.

Diese Aufgabe wird gelöst durch ein Schneidgerät gemäß Anspruch 1. In einer vorteilhaften Ausführungsform des Schneidgeräts steht das Untermesser fest, wobei das Obermesser eine oszillierende Bewegung durchführt. Die Kufe ist dabei auf einfache Weise an dem Untermesser anordenbar. Durch die Kufe unterhalb des Untermessers wird die Messeranordnung auf einer optimalen Höhe oberhalb des Untergrunds gehalten und so weitgehend verhindert, dass die Messeranordnung in einen Untergrund eindringt. Dadurch ist eine Belastung an den Messerschneiden und ein damit verbundener Verschleiß verringerbar. Gleichzeitig ist dadurch auch ein gutes Bewegen der Messeranordnung über den Untergrund möglich. Durch die ruhige Bewegung ist weiter ein energiesparender Betrieb des Schneidgeräts realisierbar, so dass bei einem Schneidgerät mit Akku-Betrieb die Laufzeiten verlängerbar sind. Die ruhigere Bewegung führt auch zu einem verbesserten Schnittbild des Rasens. Das Schneidgerät ist in einer Ausgestaltung als Mehrmesser-Grasschere, insbesondere als Doppelmesser-Grasschere, gestaltet. In einer Ausgestaltung weist die Mehrmesser-Grasschere, insbesondere die Doppelmesser-Grasschere, ein Abdeckteil mit mindestens einem Steg auf, wobei der Steg in einen zwischen den Messeranordnungen verbleibenden Spalt hineinragt. Das Abdeckteil ist beispielsweise als Kunststoffteil gestaltet. Es dient in einer Ausführungsform zum Andrücken der Messersätze an das Gehäuse und ist zu diesem Zweck mit diesem verbunden, beispielsweise verschraubt. Das Abdeckteil kann dabei so gestaltet sein, dass es auch einen Getriebesatz der Messersätze abdeckt. Die erfindungsgemäße Kufe ist in einer Ausgestaltung mit dem Abdeckteil verbunden, insbesondere einteilig mit diesem ausgebildet.

In Weiterbildung der Erfindung erstreckt sich die wenigstens eine Kufe im Wesentlichen in Laufrichtung des Schneidgeräts. Bei einer derartigen Anordnung behindert die Kufe nicht oder nur unwesentlich eine Vorwärtsbewegung des Schneidgeräts. Durch eine geeignete Ausformung kann die Kufe die Vorwärtsbewegung sogar unterstützen. Dabei ist in einer Ausführungsform die Kufe geradlinig ausgeformt. In einer anderen Ausführungsform weist die Kufe in der Draufsicht und/oder der Seitenansicht einen mit Abstand zur Messerspitze anwachsenden Querschnitt auf.

Die Kufe verhindert ein Eindringen des zugehörigen Zinkens des Untermessers in den Untergrund. Durch eine sich verbreiternde Form und/oder eine schmale Form wird verhindert, dass der zu bearbeitende Untergrund, insbesondere das zu schneidende Gras, durch die Kufe verformt wird, so dass ein Schneiden durch die Kufen nicht oder nur unwesentlich beeinträchtigt wird.

In Weiterbildung des Schneidgeräts sind mehrere, insbesondere zwei, vier oder fünf, im Wesentlichen zueinander parallele Kufen unterhalb des Untermessers angeordnet. Durch mehrere Kufen ist auch ein seitliches Kippen des Schneidgeräts verhinderbar oder zumindest reduzierbar.

In einer Ausgestaltung der Erfindung ist das Untermesser feststehend, wobei die Kufe mit dem feststehenden Untermesser verbunden ist. In einer Ausführungsform ist die Kufe einteilig mit dem Untermesser ausgeformt. In einer anderen Ausführungsform sind die Kufe(n) und das Untermesser als separate Bauteile ausgeformt, welche fest oder lösbar miteinander verbunden sind.

In einer Ausgestaltung des Schneidgeräts ist die wenigstens eine Kufe derart an dem Schneidgerät angebracht, dass sie aus der Lage unterhalb des Untermessers im Wesentlichen entfernbar ist. Durch ein Entfernen der Kufe oder wesentlicher Teile der Kufe aus der Lage unterhalb des Untermessers behindert die Kufe ein boden- und/oder kantennahes Schneiden nicht.

In einer Ausgestaltung der Erfindung ist die wenigstens eine Kufe lösbar mit dem Untermesser verbindbar. Die Kufe ist dabei bedarfsweise, beispielsweise bei Verwendung des Schneidgeräts in einem Gelände mit starken Unebenheiten, verwendbar. Für ein boden- und/oder kantennahes Schneiden ist das Schneidgerät dagegen ohne Kufe einsetzbar. Die Kufe ist dabei in einer Ausgestaltung werkzeuglos lösbar mit dem Schneidgerät verbunden, so dass ein schnelles Anbringen oder Abnehmen im Betrieb des Schneidgeräts möglich ist.

In Weiterbildung des Schneidgeräts ist die wenigstens eine Kufe mit dem Untermesser verrastbar und/oder verschraubbar und/oder auf das Untermesser aufschiebbar ist. Ein Verrasten oder "Aufclipsen" ist dabei in einer Ausführungsform durch Rasthaken an der Kufe und/oder einem mit der Kufe ausgeformten Befestigungsmittel möglich, welche in einer Ausführungsform in komplementäre Rastnasen an dem Untermesser greifen. In einer Ausführungsform ist die Kufe mit einem schienenartigen Befestigungsmittel ausgeformt, so dass sie beispielsweise über die Messerspitzen auf das Untermesser aufschiebbar ist.

In einer weiteren Ausgestaltung des Schneidgeräts ist die wenigstens eine Kufe zwischen einer Arbeitsposition unterhalb des Untermessers und einer Verstauposition verschiebbar, wobei die Kufe in der Verstauposition im Wesentlichen aus der Lage unterhalb des Untermessers entfernt ist. Die wenigstens eine Kufe ist dabei verliersicher mit dem Schneidgerät verbunden. Durch ein Verschieben des Untermessers in die Verstauposition ist ein boden- oder kantennahes Schneiden möglich.

In Weiterbildung der Erfindung ist die wenigstens eine Kufe in der Arbeitsposition und/oder der Verstauposition verrastbar. Dadurch wird ein ungewolltes Verschieben der Kufe im Betrieb verhindert.

In Weiterbildung der Erfindung ist die Kufe durch mindestens ein Rastelement in der Arbeitsposition und/oder der Verstauposition an dem Gehäuse verrastbar, wobei eine Verrastung des Rastelements durch eine Schwenkbewegung des Rastelements lösbar ist. Das Rastelement ist in einer Ausführungsform im Inneren eines Gehäuses angeordnet. Das Gehäuse weist beispielsweise einen Gehäusedeckel auf, wobei durch Bewegen des Gehäusedeckels das Innere des Gehäuses und damit das Rastelement zugänglich ist. Das Rastelement ist in einer Ausführungsform als Wippmechanismus ausgeformt, welcher zwischen einer verrasteten Position und einer freien Position verschwenkbar gelagert ist.

In Weiterbildung der Erfindung ist die Kufe in der Verstauposition im Wesentlichen innerhalb des Gehäuses angeordnet. Die Kufe ist dabei in ihrer Verstauposition durch das Gehäuse geschützt.

In einer weiteren Ausgestaltung der Erfindung umfasst das Schneidgerät ein Gehäuse mit einem Gehäusedeckel, wobei die wenigstens eine Kufe in der Verstauposition im Wesentlichen innerhalb des Gehäusedeckels angeordnet ist. In einer Ausführungsform ist dabei auch die Messeranordnung in und/oder an dem Gehäusedeckel auswechselbar angebracht. Der Gehäusedeckel kann mehrteilig ausgeformt sein.

In Weiterbildung der Erfindung dient der Gehäusedeckel mindestens teilweise als Lauffläche, wobei die Kufe wenigstens in einer Arbeitsstellung im Wesentlichen in der Ebene der Lauffläche des Gehäusedeckels liegt. Durch eine einheitliche Höhe ist ein Kippen des Schneidgeräts fast vollständig ausschließbar.

In Weiterbildung der Erfindung erstreckt sich der Gehäusedeckel und/oder eine an dem Gehäusedeckel ausgeformte Abschrägung bis zu einem Messeransatz. Insbesondere durch eine Abschrägung ist es möglich, dass das Schneidgerät leicht über kleine Kanten, Absätze und/oder andere Unebenheiten des Geländes gleitet.

In Weiterbildung der Erfindung sind der Gehäusedeckel und die Kufe einstückig ausgeformt. Die Kufe und der Gehäusedeckel sind dabei beispielsweise gemeinsam als Kunststoffteil ausgeformt. In einer anderen Ausführungsform sind die Kufe und der Gehäusedeckel als separate Bauteile ausgeformt, welche miteinander fest verbunden sind. Dabei können für die Kufe und den Gehäusedeckel unterschiedliche Materialien eingesetzt werden.

In Weiterführung der Erfindung ist der Gehäusedeckel schwenkbar an dem Gehäuse angeordnet. Durch ein Aufschwenken sind eventuell in das Gehäuse eingedrungene Schnittgräser oder ähnliche Verunreinigungen einfach entfernbar. In einer Ausführungsform ist ein Verschieben der Kufe an die Unterseite und/oder ein Lösen der Kufe von der Unterseite und/oder ein Befestigen der Kufe an der Unterseite des Untermessers bei geöffnetem Gehäusedeckel einfach möglich. Ein Zugriff bei geschlossenem Gehäusedeckel kann dagegen gesperrt sein.

In Weiterbildung der Erfindung ist die Kufe an einem Kufenaufsatz, insbesondere einer Spange, ausgeformt. Mittel zum Befestigen der Kufe an dem Schneidgerät sind dabei in einer Ausgestaltung an dem Kufenaufsatz vorgesehen. Dadurch lassen sich mehrere Kufen gleichzeitig an dem Schneidgerät anbringen bzw. von diesem Lösen.

In einer weiteren Ausgestaltung der Erfindung weist der Kufenaufsatz mindestens eine Aufnahmestruktur, insbesondere eine Raststruktur, für einen lösbaren, insbesondere werkzeuglos lösbaren, Messerschutz auf. Der Messerschutz weist hierfür korrespondierende Gegenstrukturen auf. Zusätzliche Maßnahmen zur Befestigung des Messerschutzes an dem Schneidgerät sind dabei nicht notwendig. In Einzelfällen sind jedoch zusätzliche Aufnahmestrukturen auch an dem Schneidgerät, insbesondere an einer Messeranordnung denkbar. Raststrukturen können als Erhebung, Vertiefungen, Aussparungen oder dergleichen ausgeführt sein. Die Aufnahmestrukturen können an geeigneten Positionen an dem Kufenaufsatz ausgeformt sein, so dass die Funktion der Kufen nicht beeinträchtigt wird. Dabei ist es auch denkbar, die Aufnahmestruktur an den Kufen auszubilden.

Die Aufgabe wird weiter gelöst durch eine Kufe für ein Schneidgerät, insbesondere eine Grasschere, mit mindestens einer Messeranordnung umfassend ein Untermesser und ein Obermesser, welche relativ zu einander oszillierend bewegbar sind, wobei die Kufe in einer Position unterhalb des Untermessers befestigbar ist, so dass die Kufe als Abstandshalter zwischen dem Untermesser und einem Untergrund wirkt. In einer vorteilhaften Ausgestaltung des Schneidgeräts steht dabei das Untermesser fest, wobei das Obermesser relativ zu dem Untermesser oszilliert. Durch die Kufe sind Schneidgeräte, insbesondere Grasscheren, derart aufrüstbar, dass ihre Laufleistung verbessert wird.

In Weiterbildung der Erfindung ist die Kufe lösbar mit dem Untermesser einer Schneideinrichtung formschlüssig und/oder reibschlüssig verbindbar, insbesondere auf ein Untermesser aufschiebbar und/oder mit einem Untermesser verrastbar.

In einer weiteren Ausgestaltung der Erfindung ist die wenigstens eine Kufe an einem Kufenaufsatz, insbesondere einer Spange ausgeformt, welcher lösbar mit dem Untermesser eines Schneidgeräts formschlüssig und/oder reibschlüssig verbindbar ist, insbesondere auf ein Untermesser aufschiebbar und/oder mit einem Untermesser verrastbar und/oder verschraubbar ist. An dem Kufenaufsatz sind dabei eine Vielzahl an Kufen anordenbar, welche in einer Ausführungsform im Wesentlichen parallel zu den Zinken an der Unterseite des Untermessers anordenbar sind. Bei einer Mehrmesser-Grasschere kann der Kufenaufsatz dabei mehrere Messeranordnungen, insbesondere sämtliche Messeranordnungen, überspannen.

Weitere Vorteile der Erfindung ergeben sich aus der nachfolgenden Beschreibung von Ausführungsbeispielen der Erfindung, die in den Zeichnungen schematisch dargestellt sind. Für gleiche Bauteile werden dabei einheitliche Bezugszeichen verwendet. Die Merkmale der verschiedenen Ausführungsformen können miteinander kombiniert werden, um so weitere Ausführungsformen zu erhalten.

In den Zeichnungen zeigen:
- Fig. 1:: eine Seitenansicht einer Grasschere mit erfindungsgemäßen Kufen;
- Fig. 2:: eine Unteransicht der Grasschere gemäß Fig. 1;
- Fig. 3: eine Draufsicht auf die Grasschere gemäß Fig. 1;
- Fig. 4:: eine Draufsicht auf eine Grasschere mit erfindungsgemäßen Kufen gemäß einem zweiten Ausführungsbeispiel;
- Fig. 5:: eine perspektivische Ansicht erfindungsgemäßer Kufen und einer Messeranordnung für eine Grasschere gemäß einem dritten Ausführungsbeispiel;
- Fig. 6:: eine Unteransicht eines Schneidgeräts mit einem erfindungsgemäßen Kufenaufsatz gemäß einem vierten Ausführungsbeispiel der Erfindung;
- Fig. 7:: eine Unteransicht des Schneidgeräts gemäß Figur 6, wobei der Kufenaufsatz von dem Schneidgerät getrennt ist;
- Fig. 8:: ein Detail des Kufenaufsatzes gemäß Figur 6;
- Fig. 9:: einen Messerschutz für ein Schneidgerät gemäß Fig. 6 in einer perspektivischen Darstellung;
- Fig. 10:: eine Unteransicht eines Gehäusedeckels mit erfindungsgemäßen Kufen gemäß einem fünften Ausführungsbeispiel der Erfindung;
- Fig. 11:: eine perspektivische Darstellung des Gehäusedeckels gemäß Fig. 10 mit Kufen in einer Arbeitsposition;
- Fig. 12:: eine perspektivische Darstellung des Gehäusedeckels gemäß Fig. 10 mit Kufen in einer Verstauposition und
- Fig. 13:: eine geschnittene Seitenansicht eines Rastelements zum Verrasten von Kufen gemäß Fig. 10.

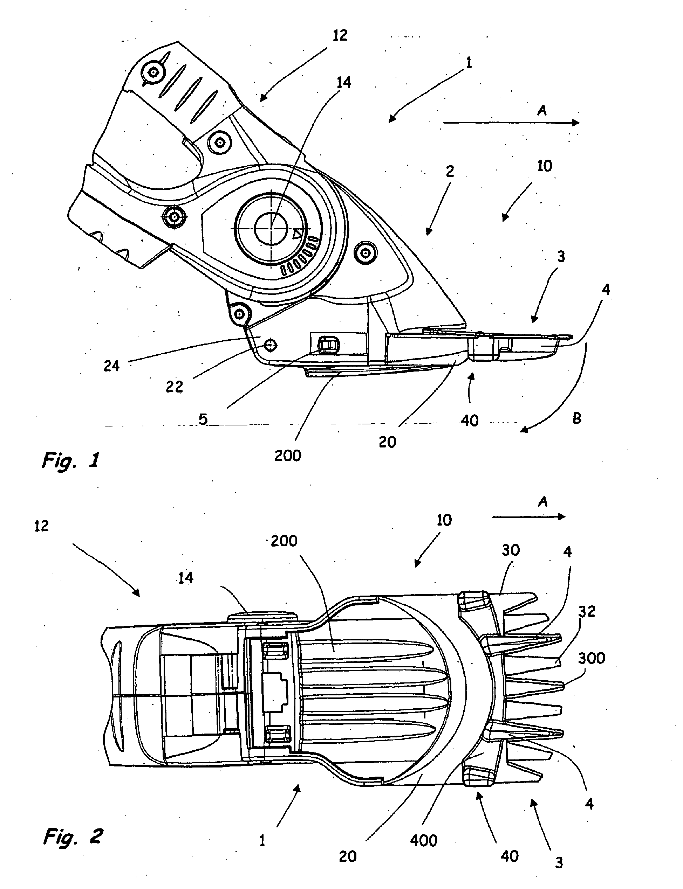

Fig. 1 zeigt schematisch eine Grasschere 1 in einer Seitenansicht. Die dargestellte Grasschere 1 umfasst einen Schneidkopf 10 und ein Griffteil 12. Der Schneidkopf 10 und das Griffteil 12 sind über eine Achse 14 miteinander verbunden, wobei ein Winkel zwischen dem Schneidkopf 10 und dem Griffteil 12 verstellbar ist.

Der Schneidkopf 10 umfasst ein Gehäuse 2 und eine Messeranordnung 3. Das dargestellte Gehäuse 2 umfasst einen Gehäusegrundkörper 24 und einen schwenkbar mit dem Gehäusegrundkörper 24 verbundenen Gehäusedeckel 20. Der Gehäusedeckel 20 ist in der in Fig. 1 dargestellten Arbeitsposition mit dem Gehäusegrundkörper 24 verrastet. Diese Rastverbindung ist in der dargestellten Ausführungsform durch einen Auslöseknopf 5 lösbar, wobei der Gehäusedeckel 20 in die durch einen Pfeil B dargestellte Richtung aufschwenkt.

Die Grasschere 1 wird im Gebrauch in Laufrichtung A verschoben. Hierfür wird beispielsweise durch einen Nutzer an dem nicht dargestellten Ende des Griffteils 12 eine Kraft aufgebracht. Der dargestellte Gehäusedeckel 20 weist Laufkufen 200 auf, durch welche ein Nutzer beim Verfahren der Grasschere über einen nicht dargestellten Untergrund unterstützt wird. Durch die Laufkufen wird die Messeranordnung 3 in einen bestimmten Abstand zu dem Untergrund gehalten. Zum Bewegen einer Grasschere können alternativ oder zusätzlich nicht dargestellte Laufräder an dem Gehäuse an Aufnahmen 22 angeordnet sein. Erfindungsgemäß sind unterhalb der Messeranordnung 3 zwei Kufen 4 angebracht, von welchen in der Seitenansicht gemäß Fig. 1 nur eine sichtbar ist. Durch die Kufen 4 wird verhindert, dass beim Verfahren auf unwegsamen Gelände, insbesondere beim Verfahren über Erdhügel oder ähnliches, die Messeranordnung 3 in den Boden eintaucht. Durch die zwei Kufen 4 wird auch verhindert, dass der Schneidkopf 10 kippt.

In der in Fig. 1 dargestellten Ausführungsform sind die Kufen 4 über eine Befestigungsvorrichtung 40 mit der Messeranordnung 3 verbunden. In anderen Ausführungsformen sind eine oder mehrere Kufen einstückig mit einem Untermesser der Messeranordnung ausgeformt.

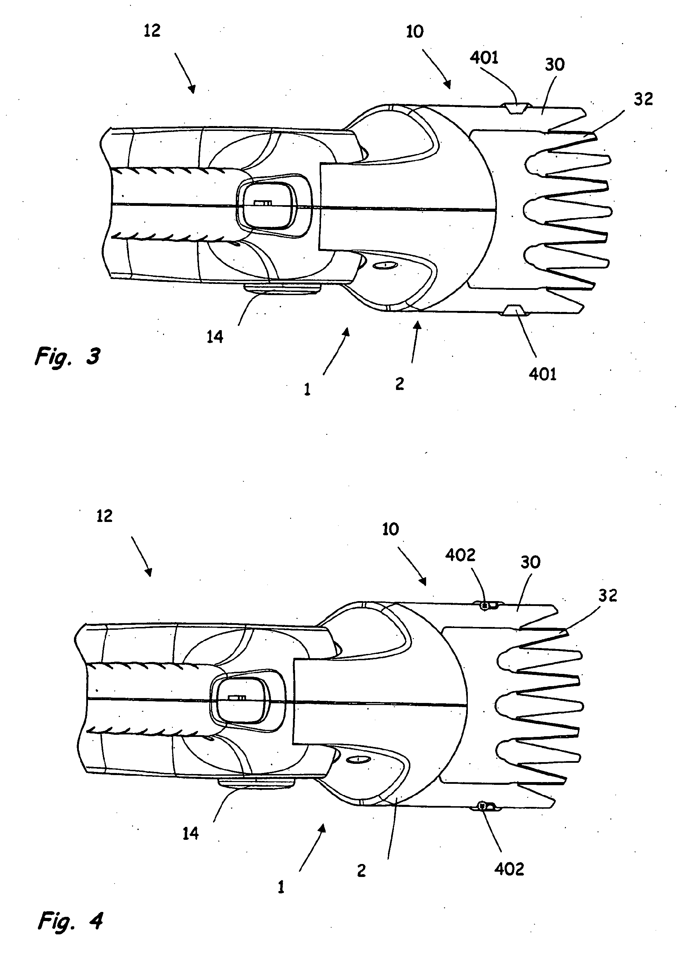

Fig. 2 und 3 zeigen schematisch die Grasschere 1 gemäß Fig. 1 in einer Unteransicht bzw. einer Draufsicht. Wie aus Fig. 2 und 3 erkennbar, umfasst die Messeranordnung 3 ein Untermesser 30 sowie ein Obermesser 32. In der dargestellten Ausführungsform ist das Untermesser 30 feststehend, wobei das Obermesser 32 relativ zu dem Untermesser 30 für eine Schneidbewegung oszillierend bewegbar ist. In der dargestellten Ausführungsform sind zwei Kufen 4 über die Befestigungsvorrichtung 40 mit dem Untermesser 30 verbunden. Die zwei Kufen 4 entsprechen dabei in Form und Größe jeweils in etwa einem Zinken 300 des Untermessers 30 und sind jeweils im Wesentlichen unterhalb eines Zinkens 300 angebracht. Die Befestigungsvorrichtung 40 umfasst eine in Fig. 2 sichtbare Spange 400, welche quer zur Laufrichtung A an der Unterseite des Untermessers 30 angeordnet ist. Die Kufen 4 sind mit ihrem von der Messerspitze abgewandten Ende an der Spange 400 befestigt. Wie in Fig. 3 erkennbar ist, umfasst die Befestigungsvorrichtung 40 weiter Rastnasen 401, welche für eine Befestigung der Kufen 4 an der Unterseite des Untermessers 30 mit dem Untermesser 30 verrastet werden. Die Spange 400 und/oder die Rastnasen 401 sind dabei vorzugsweise elastisch verformbar, so dass die Rastverbindung mit dem Untermesser 30 durch ein Verformen der Befestigungsvorrichtung 40 lösbar oder herstellbar ist.

Fig. 4 zeigt schematisch eine Draufsicht auf eine Grasschere 1 mit einer Kufe gemäß einem zweiten Ausführungsbeispiel. Die dargestellte Grasschere 1 entspricht dabei der Grasschere gemäß den Fig. 1 bis 3. An der Unterseite des Untermessers 30 ist eine in Fig. 4 nicht sichtbare Kufe oder sind mehrere Kufen 4 gemäß den Fig. 1 und 2 angeordnet. Die Befestigungsvorrichtung umfasst in der Ausführungsform gemäß Fig. 4 Schrauben 402, durch welche beispielsweise eine nicht sichtbare Spange 400 gemäß Fig. 2 an der Unterseite des Untermessers 30 lösbar anbringbar ist. Die Kufen 4 sind dabei in einer Ausführungsform wie in Fig. 2 dargestellt mit der Spange 400 verbunden.

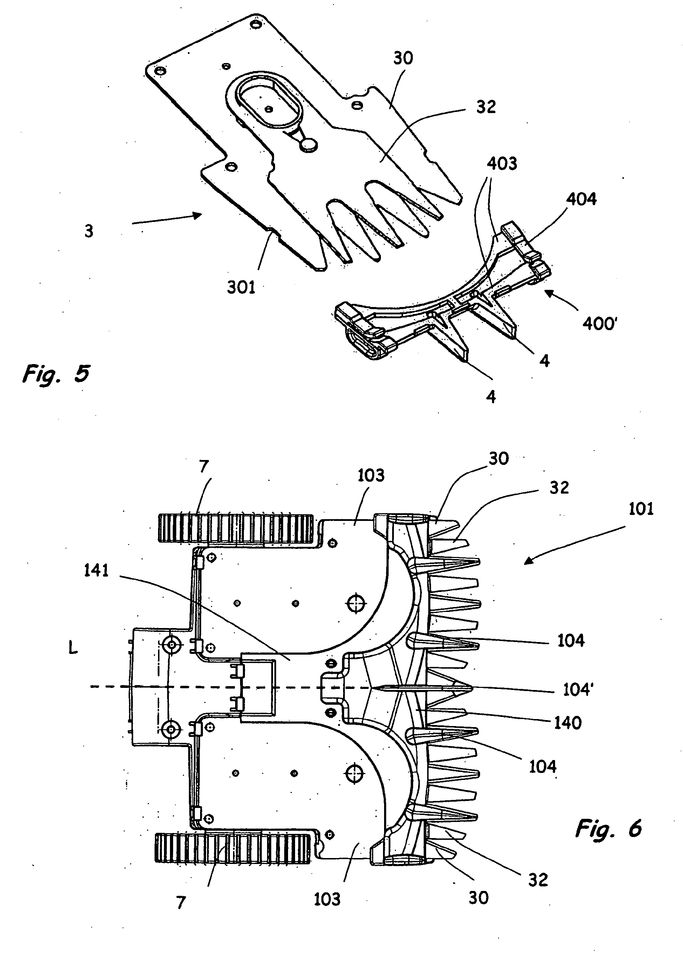

Fig. 5 zeigt schematisch in einer perspektivischen Ansicht eine Messeranordnung 3, umfassend ein Untermesser 30 und ein relativ dazu oszillierend bewegbares Obermesser 32, für eine in Fig. 4 nicht dargestellte Grasschere sowie Kufen 4 gemäß einem dritten Ausführungsbeispiel der Erfindung. Die Kufen 4 sind an einer Spange 400' angeordnet, welche zwei Trägerelemente 403 aufweist, die in Gebrauch an der Unterseite des Untermessers 30 angeordnet sind. An den Seiten der Spange 400' ist eine Schiene 404 ausgeformt, welche auf das Untermesser 30 aufschiebbar ist. Das dargestellte Untermesser 30 weist weiter Ausnehmungen 301 auf, durch welche die Schienen 404 an einer vorbestimmten Position mit dem Untermesser 30 verrastbar sind.

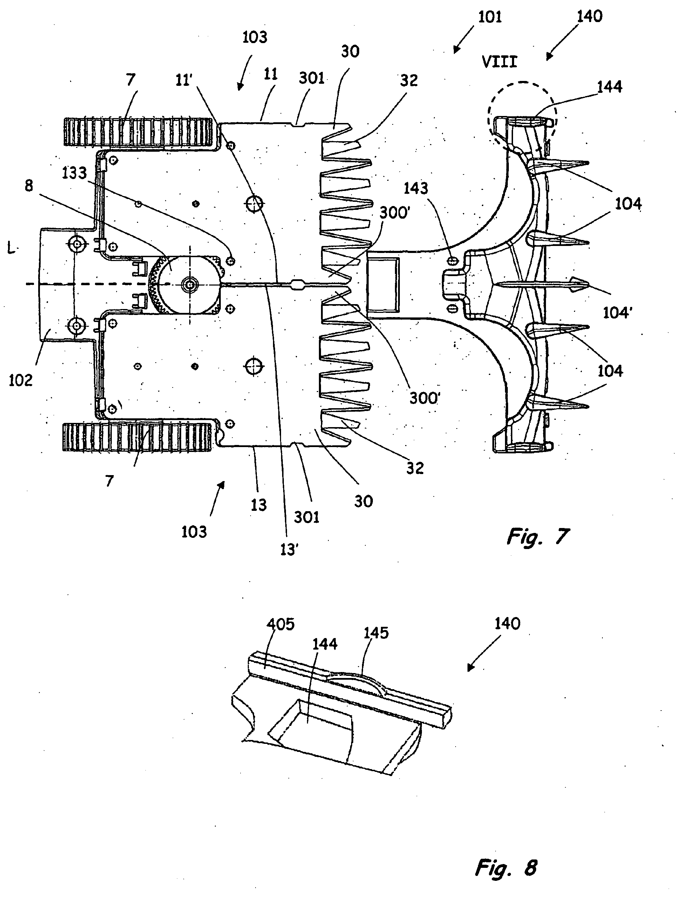

Fig. 6 und 7 zeigen schematisch ein als Doppelmesser-Grasschere 101 ausgebildetes Schneidgerät von unten mit einem Kufenaufsatz 140, welcher in der Darstellung gemäß Fig. 6 an der Doppelmesser-Grasschere 101 angebracht ist und in der Darstellung gemäß Fig. 7 von der Doppelmesser-Grasschere 101 getrennt dargestellt ist. Die dargestellte Doppelmesser-Grasschere 1 umfasst zwei Messeranordnungen 103, welche zwischen zwei Rädern 7 zum Verfahren der Doppelmesser-Grasschere 101 angeordnet sind. Die dargestellten Messeranordnungen 103 sind dabei bezüglich einer Längsachse L symmetrisch gestaltet und umfassen jeweils ein Untermesser 30 und ein relativ dazu oszillierend bewegbares Obermesser 32. Der Kufenaufsatz 140 erstreckt sich bei der dargestellten Doppelmesser-Grasschere 101 zwischen den Außenrändern 11, 13 der beiden Untermesser 30 der Doppelmesser-Grasschere 101 und umspannt so beide Messeranordnungen 103. An den Außenrändern 11, 13 sind jeweils Ausnehmungen 301 ausgeformt, welche als Aufnahmestrukturen für korrespondierende, in den Fig. 6 und 7 nicht dargestellte Befestigungsstrukturen an dem Kufenaufsatz 140 dienen.

An dem Kufenaufsatz 140 sind vier Kufen 104 vorgesehen, welche jeweils unterhalb von Zinken der Untermesser 30 angeordnet sind. Die Kufen 104 sind symmetrisch bezüglich der Längsachse L angeordnet und erstrecken sich in Richtung der Längsachse L. Die dargestellten Untermesser 30 weisen an den Rändern 11, 13, 11', 13' jeweils Halbzähne auf, wobei unterhalb der Halbzähne 300' an den Innenrändern 11', 13' eine Spitze 104' angeordnet ist. Die Spitze 104' weist einen nicht sichtbaren Steg auf, welcher beim Anbringen des Kufenaufsatzes 140 einen Spalt zwischen den Innenrändern 11', 13' ausfüllt. An der Spitze 104' ist in einer Ausgestaltung ebenfalls eine Kufe ausgebildet.

Der dargestellte Kufenaufsatz 140 ist einteilig mit einem Abdeckelement 141 ausgebildet, welches ein in Fig. 7 sichtbares Getriebe 8 der Messeranordnungen 103 abdeckt. Der dargestellte Kufenaufsatz 140 ist weiter mit den Messeranordnungen 103 und/oder dem Gehäuse 102 verschraubt, wobei zu diesem Zweck an dem dargestellten Kufenaufsatz 140 zwei Schraubenlöcher 143 vorgesehen sind, welche zu zwei Gewindelöchern 133 an den Messeranordnungen 103 korrespondieren. Durch das Abdeckelement 141 werden weiter die Messeranordnungen 103 an ein Gehäuse 102 der Doppelmesser-Grasschere 101 gedrückt.

Fig. 8 zeigt schematisch ein Detail VIII des Kufenaufsatzes 140 gemäß Fig. 7 in einer Draufsicht. Wie in Fig. 8 erkennbar, weist der Kufenaufsatz 140 schienenförmige Aufnahmen 405 für die Ränder 11, 13 der Untermesser 30 gemäß Fig. 6 und 7 auf. Zur Materialeinsparung sind in der dargestellten Ausführungsform Ausnehmungen 144 vorgesehen.

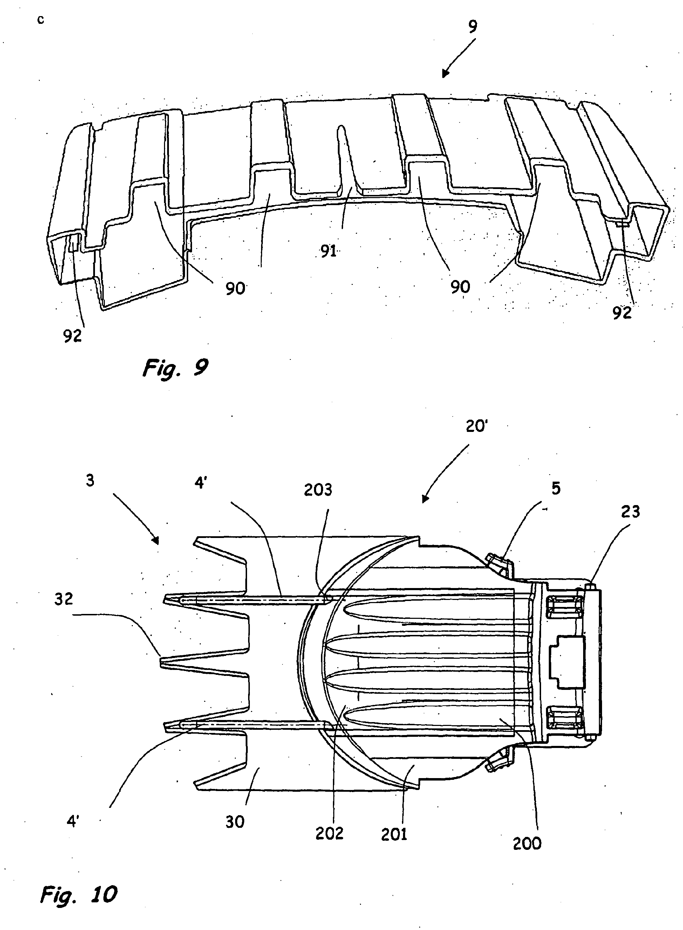

Der dargestellte Kufenaufsatz 140 weist weiter an den Seitenrändern als Raststrukturen 145 gestaltete Aufnahmestrukturen auf. Die Raststrukturen 145 sind so gestaltet, dass sie mit Gegenstrukturen an einem in Fig. 9 dargestellten Messerschutz 9 in Eingriff gebracht werden können. In der dargestellten Ausführungsform sind die Raststrukturen 145 jeweils als eine Erhebung gestaltet, welche zu einer Vertiefung und/oder einer Hinterschneidung an einer Innenfläche des in Fig. 9 dargestellten Messerschutzes korrespondiert. Alternativ oder zusätzlich sind in anderen Ausgestaltungen Vertiefungen und/oder Ausnehmungen an dem Kufenaufsatz 140 vorgesehen. Die Raststrukturen 145 sind in dem dargestellten Ausführungsbeispiel an den Aufnahmen 405 an einer Oberseite des Kufenaufsatzes 140 ausgeformt. In anderen Ausgestaltungen sind alternativ oder zusätzlich Raststrukturen an den Seitenflächen ausgeformt. Durch Anbringen von Aufnahmestrukturen an dem beispielsweise als Spritzgussteil ausgeformten Kufenaufsatz 140 können entsprechende Aufnahmestrukturen an den Messeranordnungen 103 entfallen, so dass die Messeranordnungen 103 kostengünstig herstellbar sind.

Fig. 9 zeigt schematisch den Messerschutz 9 in einer perspektivischen Darstellung. Der Messerschutz 9 weist Aufnahmen 90 für die Kufen 104 des Kufenaufsatzes 140 gemäß Fig. 6, 7 und 8 auf. Weiter weist der Messerschutz 9 eine Aufnahme 91 für die Spitze 104' (siehe Fig. 6 und 7) auf. Der Messerschutz 9 weist weiter Vertiefungen 92 zur Verrastung mit dem Kufenaufsatz 140 gemäß Fig. 6, 7 und 8 auf.

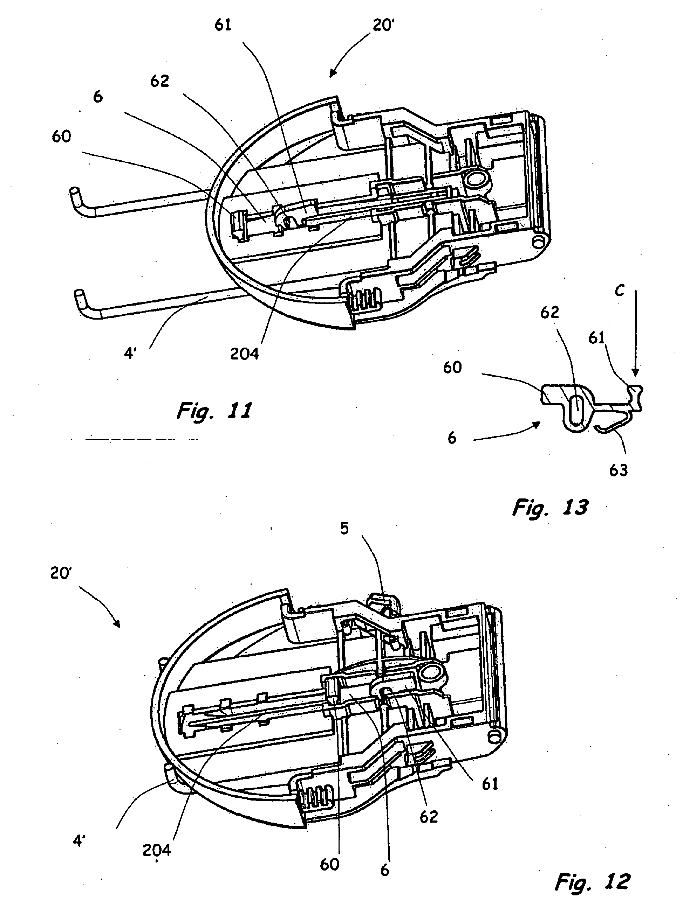

Fig. 10 bis 12 zeigen schematisch einen Gehäusedeckel 20' für eine Grasschere gemäß Fig. 1, wobei Kufen 4' gemäß einem fünften Ausführungsbeispiel der Erfindung unterhalb des Untermessers 30 anbringbar sind. Für eine bessere Übersicht wird in Fig. 11 und 12 auf eine Darstellung der Messeranordnung 3 verzichtet.

Der in Fig. 10 bis 12 dargestellte Gehäusedeckel 20' entspricht im Wesentlichen dem Gehäusedeckel 20 gemäß Fig. 1 bis 4. Insbesondere weist der dargestellte Gehäusedeckel 20' an seiner Unterseite Laufkufen 200 auf. Der Gehäusedeckel 20' ist über eine Schwenkachse 23 beispielsweise mit dem Gehäusegrundkörper 24 gemäß Fig. 1 schwenkbar verbindbar. An dem Gehäusedeckel 20' ist, wie in Fig. 10 dargestellt, eine Messeranordnung 3, umfassend ein Obermesser 32 und das Untermesser 30, lagerbar. In dem Gehäusedeckel 20' sind weiter Kufen 4' verschieblich gelagert. Die dargestellten Kufen 4' sind zwischen einer in Fig. 10 und 11 dargestellten Arbeitsposition und einer in Fig. 12 dargestellten Verstauposition verschiebbar. In der in Fig. 10 und 11 dargestellten Arbeitsposition sind die Kufen 4' unterhalb des Untermessers 30 angeordnet. In der in Fig. 12 dargestellten Verstauposition sind die Kufen 4' dagegen im Wesentlichen aus der Lage unterhalb des Untermessers 30 entfernt, so dass die Kufen 4' ein boden- oder kantennahes Schneiden nicht behindern. Anstatt eines Grasscherenmessers kann auch ein Strauchscherenmesser oder ein Heckenscherenmesser ohne Behinderung der Funktion adaptiert werden.

In dem in Fig. 10 bis 12 dargestellten Ausführungsbeispiel ist der Gehäusedeckel 20' zweiteilig ausgeformt, umfassend einen Grundkörper 201 und ein Abdeckelement 202. Das Abdeckelement 202 weist Öffnungen 203 für die Kufen 4' auf. Die Kufen 4' sind somit in dem dargestellten Ausführungsbeispiel in dem Gehäusedeckel 20' zwischen dem Grundkörper 201 und dem Abdeckelement 202 in der Verstauposition lagerbar.

Die dargestellten Kufen 4' sind als Schenkel eines im Wesentlichen U-förmigen Bügels ausgeformt, welche über einen in den Figuren nicht sichtbaren Steg mit einander verbunden sind. An dem Steg ist ein in Fig. 11 und 12 dargestelltes Rastelement 6 angebracht, durch das der Bügel und damit die Kufen 4' in der Arbeitsposition gemäß Fig. 11 und in der Verstauposition gemäß Fig. 12 verrastbar ist.

Das Rastelement 6 ist im Detail in Fig. 13 dargestellt. Das dargestellte Rastelement 6 ist als Wippe mit zwei Enden 60, 61 ausgeformt, welche über ein Langloch 62 verschwenkbar an dem Steg angeordnet ist. Durch Verschwenken des Rastelements 6 wird die Rastverbindung gelöst oder hergestellt. Das Rastelement 6 ist in einem gelösten Zustand in einer Nut 204 in dem Gehäusedeckel 20' verschiebbar.

In dem dargestellten Ausführungsbeispiel wird zum Verschieben der Kufen 4' aus der in Fig. 11 dargestellten Arbeitsposition das Ende 60 des Rastelements 6 gedrückt und so in die in Fig. 11 dargestellte Position gebracht. In der in Fig. 11 dargestellten Position ist die Rastverbindung gelöst. Das Rastelement 6 und die damit über den Steg verbundenen Kufen 4' sind nach Lösen der Rastverbindung entlang der Nut 204 in die in Fig. 12 dargestellte Verstauposition verschiebbar. Durch Drücken des Endes 61 ist das dargestellte Rastelement 6 in der Verstauposition wie in Fig. 12 dargestellt verrastbar. Selbstverständlich sind eine Vielzahl an weiteren Rastmitteln denkbar, durch welche die Kufen 4' alternativ und/oder zusätzlich in einer Arbeitsposition und/oder einer Verstauposition verrastbar sind.

Fig. 13 zeigt schematisch das Rastelement 6 gemäß Fig. 11 und 12 in einer geschnittenen Seitenansicht. Das Rastelement 6 ist an der Seite des Endes 61 mit einem elastisch verformbaren Bereich 63 ausgeformt. Der elastisch verformbare Bereich 63 wird beim Aufbringen einer Druckkraft in eine durch den Pfeil schematisch dargestellte Richtung C verformt. Nach Wegfall der Druckkraft entlang der Richtung C zwingt der elastische Bereich 63 das Rastelement 6 in die Verriegelungsposition gemäß Fig. 12.

## Patentansprüche

1. Schneidgerät, insbesondere Grasschneidegerät (1, 101), mit mindestens einer Messeränordnung (3, 103) umfassend ein Untermesser (30) und ein Obermesser (32), welche relativ zueinander oszillierend bewegbar sind,
wobei unterhalb wenigstens eines Zinkens (330) des Untermessers (30) eine Kufe (4, 4', 104) angeordnet ist, welche als Abstandshalter zwischen dem Untermesser (30) und einem Untergrund wirkt,
**dadurch gekennzeichnet,**
**dass** die Größe und/oder Form der Kufe (4, 4', 104) unterhalb des wenigstens einen Zinkens (300) kleiner oder gleich dem Zinken (300) ist.

2. Schneidgerät nach Anspruch 1, **dadurch gekennzeichnet, dass** die wenigstens eine Kufe (4, 4', 104) sich im Wesentlichen in Laufrichtung (B) des Schneidgeräts erstreckt.

3. Schneidgerät nach einem der vorhergehenden Ansprüche, **dadurch gekennzeichnet, dass** mehrere, insbesondere zwei, vier oder fünf, im Wesentlichen zueinander parallele Kufen (4, 104) unterhalb des Untermessers (30) angeordnet rind.

4. Schneidgerät nach einem der vorhergehenden Ansprüche, **dadurch gekennzeichnet, dass** das Untermesser (30) feststehend ist, wobei die Kufe (4, 104) mit dem feststehenden Untermesser (30) verbunden ist.

5. Schneidgerät nach einem der vorhergehenden Ansprüche, **dadurch gekennzeichnet, dass** die wenigstens eine Kufe (4, 4', 104) derart an dem Schneidgerät angebracht ist, dass sie aus der Lage unterhalb des Untermessers (30) im Wesentlichen entfernbar ist.

6. Schneidgerät nach Anspruch 5, **dadurch gekennzeichnet, dass** die wenigstens eine Kufe (4, 104) lösbar mit dem Untermesser (30) verbindbar ist.

7. Schneidgerät nach Anspruch 6, **dadurch gekennzeichnet, dass** die wenigstens eine Kufe (4, 104) mit dem Untermesser (30) verrastbar und/oder verschraubbar ist und/oder auf das Untermesser (30) aufschiebbar ist.

8. Schneidgerät nach Anspruch 5, **dadurch gekennzeichnet, dass** die wenigstens eine Kufe (4') zwischen einer Arbeitsposition unterhalb des Untermessers (30) und einer Verstauposition verschiebbar ist, wobei die Kufe (4') in der Verstauposition im Wesentlichen aus der Lage unterhalb des Untermessers (30) entfernt ist.

9. Schneidgerät nach Anspruch 8, **dadurch gekennzeichnet, dass** die wenigstens eine Kufe (4') in der Arbeitsposition und/oder der Verstauposition verrastbar ist.

10. Schneidgerät nach Anspruch 9, **dadurch gekennzeichnet, dass** die Kufe (4') durch mindestens ein Rastelement (6) in der Arbeitsposition und/oder der Verstauposition an dem Gehäuse (2) verrastbar ist, wobei eine Verrastung des Rastelements durch eine Schwenkbewegung des Rastelements (6) lösbar ist.

11. Schneidgerät nach einem der Ansprüche 8 bis 10, **dadurch gekennzeichnet, dass** das Schneidgerät ein Gehäuse (2) mit einem Gehäusedeckel (20') umfasst, wobei die wenigstens eine Kufe (4') in der Verstauposition im Wesentlichen innerhalb des Gehäusedeckels (20') angeordnet ist.

12. Schneidgerät nach einem der vorhergehenden Ansprüche, **dadurch gekennzeichnet, dass** das Schneidgerät ein Gehäuse (2) mit einem Gehäusedeckel (20, 20') umfasst, wobei der Gehäusedeckel (20, 20') mindestens teilweise als Lauffläche dient und die Kufe (4, 4', 104) wenigstens in einer Arbeitsstellung im Wesentlichen in der Ebene der Lauffläche des Gehäusedeckels (20, 20') liegt.

13. Schneidgerät nach einem der vorhergehenden Ansprüche, **dadurch gekennzeichnet, dass** das Schneidgerät ein Gehäuse (2) mit einem Gehäusedeckel (20, 20') umfasst, wobei der Gehäusedeckel (20, 207 sich bis zu einem Messeransatz erstreckt und/oder mit einer sich bis zu einem Messeransatz erstreckenden Abschrägung ausgeformt ist.

14. Schneidgerät nach Anspruch 13, **dadurch gekennzeichnet, dass** die Kufe einstückig mit dem Gehäusedeckel ausgeformt ist.

15. Schneidgerät nach einem der Ansprüche 11 bis 14, **dadurch gekennzeichnet, dass** der Gehäusedeckel (20, 20') schwenkbar an dem Gehäuse angeordnet ist.

16. Schneidgerät nach einem der vorhergehenden Ansprüche, **dadurch gekennzeichnet, dass** die Kufe (4, 104) an einem Kufenaufsatz (40, 140), insbesondere einer Spange, ausgeformt ist.

17. Schneidgerät nach Anspruch 16, **dadurch gekennzeichnet, dass** der Kufenaufsatz (140) mindestens eine Aufnahmestruktur (145), insbesondere eine Raststruktur, für einen lösbaren, insbesondere werkzeuglos lösbaren, Messerschutz (9) aufweist.

## Claims

1. Cutting appliance, in particular a grass cutting appliance (1, 101), having at least one blade arrangement (3, 103), comprising a bottom blade (30) and a top blade (32), which are movable in an oscillating manner in relation to one another, wherein, underneath at least one tine (300) of the bottom blade (30), there is arranged a skid (4, 4', 104), which acts as a spacer between the bottom blade (30) and a substrate, **characterized in that** the size and/or shape of the skid (4, 4', 104) underneath the at least one tine (300) is smaller or the same as the tine (300).

2. Cutting appliance according to Claim 1, **characterized in that** the at least one skid (4, 4', 104) extends substantially in the running direction (A) of the cutting appliance.

3. Cutting appliance according to either of the preceding claims, **characterized in that** a plurality of, in particular two, four or five, substantially parallel skids (4, 104) are arranged underneath the bottom blade (30).

4. Cutting appliance according to one of the preceding claims, **characterized in that** the bottom blade (30) is fixed, wherein the skid (4, 104) is connected to the fixed bottom blade (30).

5. Cutting appliance according to one of the preceding claims, **characterized in that** the at least one skid (4, 4', 104) is attached to the cutting appliance such that it is substantially removable from its position underneath the bottom blade (30).

6. Cutting appliance according to Claim 5, **characterized in that** the at least one skid (4, 104) is connectable to the bottom blade (30) in a detachable manner.

7. Cutting appliance according to Claim 6, **characterized in that** the at least one skid (4, 104) is latchable and/or screwable to the bottom blade (30) and/or can be pushed onto the bottom blade (30).

8. Cutting appliance according to Claim 5, **characterized in that** the at least one skid (4') is movable between a working position underneath the bottom blade (30) and a stowed position, wherein, in the stowed position, the skid (4') is substantially removed from its position underneath the bottom blade (30).

9. Cutting appliance according to Claim 8, **characterized in that** the at least one skid (4') is latchable in the working position and/or the stowed position.

10. Cutting appliance according to Claim 9, **characterized in that** the skid (4') is latchable in the working position and/or the stowed position on the housing (2) by way of at least one latching element (6), wherein latching of the latching element (6) is detachable by way of a pivoting movement of the latching element (6).

11. Cutting appliance according to one of Claims 8 to 10, **characterized in that** the cutting appliance comprises a housing (2) having a housing cover (20'), wherein, in the stowed position, the at least one skid (4') is arranged substantially swithin the housing cover (20').

12. Cutting appliance according to one of the preceding claims, **characterized in that** the cutting appliance comprises a housing (2) having a housing cover (20, 20'), wherein the housing cover (20, 20') serves at least partially as a running surface and the skid (4, 4', 104), at least in a working position, is located substantially in the plane of the running surface of the housing cover (20, 20').

13. Cutting appliance according to one of the preceding claims, **characterized in that** the cutting appliance comprises a housing (2) having a housing cover (20, 20'), wherein the housing cover (20, 20') extends as far as a blade root and/or is formed with a bevel that extends as far as a blade root.

14. Cutting appliance according to Claim 13, **characterized in that** the skid is formed integrally with the housing cover.

15. Cutting appliance according to one of Claims 11 to 14, **characterized in that** the housing cover (20, 20') is arranged pivotably on the housing.

16. Cutting appliance according to one of the preceding claims, **characterized in that** the skid (4, 104) is formed on a skid attachment (40, 140), in particular a clasp.

17. Cutting appliance according to Claim 16, **characterized in that** the skid attachment (140) has at least one receiving structure (145), in particular a latching structure, for a blade protector (9) which is detachable, in particular without tools.

## Revendications

1. Appareil de coupe, en particulier appareil de coupe d'herbe (1, 101), comprenant au moins un agencement de couteaux (3, 103) comportant un couteau inférieur (30) et un couteau supérieur (32) qui sont déplaçables l'un par rapport à l'autre de manière oscillante,
un patin (4, 4', 104) étant disposé en dessous d'au moins une dent (330) du couteau inférieur (30), lequel patin agit en tant qu'élément d'espacement entre le couteau inférieur (30) et le sol,
**caractérisé en ce que**
la taille et/ou la forme des patins (4, 4', 104) en dessous de l'au moins une dent (300) sont inférieures ou égales à celles de la dent (300).

2. Appareil de coupe selon la revendication 1, **caractérisé en ce que** l'au moins un patin (4, 4', 104) s'étend essentiellement dans le sens de marche (A) de l'appareil de coupe.

3. Appareil de coupe selon l'une quelconque des revendications précédentes, **caractérisé en ce que** plusieurs, en particulier deux, quatre ou cinq patins (4, 104) essentiellement parallèles les uns aux autres sont disposés en dessous du couteau inférieur (30).

4. Appareil de coupe selon l'une quelconque des revendications précédentes, **caractérisé en ce que** le couteau inférieur (30) est fixe, le patin (4, 104) étant relié au couteau inférieur (30) fixe.

5. Appareil de coupe selon l'une quelconque des revendications précédentes, **caractérisé en ce que** l'au moins un patin (4, 4', 104) est monté sur l'appareil de coupe de telle sorte qu'il puisse essentiellement être retiré de la position en dessous du couteau inférieur (30).

6. Appareil de coupe selon la revendication 5, **caractérisé en ce que** l'au moins un patin (4, 104) peut être relié de manière amovible au couteau inférieur (30).

7. Appareil de coupe selon la revendication 6, **caractérisé en ce que** l'au moins un patin (4, 104) peut être encliqueté avec et/ou vissé sur le couteau inférieur (30) et/ou peut être enfilé sur le couteau inférieur (30).

8. Appareil de coupe selon la revendication 5, **caractérisé en ce que** l'au moins un patin (4') peut être coulissé entre une position de travail en dessous du couteau inférieur (30) et une position de rangement, le patin (4') étant, dans la position de rangement, retiré essentiellement de la position en dessous du couteau inférieur (30).

9. Appareil de coupe selon la revendication 8, **caractérisé en ce que** l'au moins un patin (4') peut être encliqueté dans la position de travail et/ou la position de rangement.

10. Appareil de coupe selon la revendication 9, **caractérisé en ce que** le patin (4') peut être encliqueté sur le boîtier (2) dans la position de travail et/ou la position de rangement au moyen d'au moins un élément d'encliquetage (6), un encliquetage de l'élément d'encliquetage (6) pouvant être libéré grâce à un mouvement de pivotement de l'élément d'encliquetage (6).

11. Appareil de coupe selon l'une quelconque des revendications 8 à 10, **caractérisé en ce que** l'appareil de coupe comporte un boîtier (2) doté d'un couvercle de boîtier (20'), l'au moins un patin (4') étant disposé, dans la position de rangement, essentiellement à l'intérieur du couvercle de boîtier (20').

12. Appareil de coupe selon l'une quelconque des revendications précédentes, **caractérisé en ce que** l'appareil de coupe comporte un boîtier (2) doté d'un couvercle de boîtier (20, 20'), le couvercle de boîtier (20, 20') servant au moins en partie de surface de glissement et le patin (4, 4', 104) se situant, au moins dans une position de travail, essentiellement dans le plan de la surface de glissement du couvercle de boîtier (20, 20').

13. Appareil de coupe selon l'une quelconque des revendications précédentes, **caractérisé en ce que** l'appareil de coupe comporte un boîtier (2) doté d'un couvercle de boîtier (20, 20'), le couvercle de boîtier (20, 20') s'étendant jusqu'à une base de couteau et/ou étant formé avec un biseautage s'étendant jusqu'à une base de couteau.

14. Appareil de coupe selon la revendication 13, **caractérisé en ce que** le patin est formé d'une seule pièce avec le couvercle de boîtier.

15. Appareil de coupe selon l'une quelconque des revendications 11 à 14, **caractérisé en ce que** le couvercle de boîtier (20, 20') est disposé de manière pivotante sur le boîtier.

16. Appareil de coupe selon l'une quelconque des revendications précédentes, **caractérisé en ce que** le patin (4, 104) est formé sur un embout de patin (40, 140), en particulier une pince.

17. Appareil de coupe selon la revendication 16, **caractérisé en ce que** l'embout de patin (140) comprend au moins une structure de réception (145), en particulier une structure d'encliquetage, pour une protection de couteau (9) amovible, en particulier amovible sans outil.
